# EUROPEAN PATENT SPECIFICATION

(11) **EP 2 727 431 B1**
(45) Date of publication and mention of the grant of the patent: **01.07.2015**
(21) Application number: 11731303.1
(22) Date of filing: 01.07.2011
(51) Int. Cl.: H04W 76/02

(54) **SERVICE REQUEST FREQUENCY BASED 3GDT**
3GDT AUF DER BASIS VON DIENSTANFRAGEFREQUENZ
3GDT BASÉ SUR LA FRÉQUENCE DES DEMANDES DE SERVICE

(43) Date of publication of application: 07.05.2014
(73) Proprietor: Telefonaktiebolaget L M Ericsson (publ), 164 83 Stockholm (SE)
(72) Inventor: OLSSON, Lasse, S-444 91 Stenungssund (SE); QU, Zhiwei, Shanghai 201204 (CN)
(74) Representative: Ericsson
(86) International application number: PCT/EP2011/061123
(87) International publication number: WO 2013/004272

(56) References cited:
- EP-A1- 2 339 785
- WO-A1-2008/077423
- US-A1- 2009 252 133

## Description

### TECHNICAL FIELD

The present invention relates to a method for reducing the signalling load of a GPRS core network system. The GPRS core network system comprises a first UE, a first RNC, a first SGSN, a first core network node, and a first IP network. The first UE is arranged to be in communication with the first RNC. The first RNC is arranged to be in communication with the SGSN for non-3GDT communication of the GPRS core network system or the core network node for 3GDT communication of the GPRS core network system. The first SGSN is arranged to be in communication with the first core network node, where the first core network node is arranged to be in contact with the first IP network. One or more service requests originate from the first UE to the SGSN.

### BACKGROUND ART

### Abbreviations:

- 3GDT: 3G Direct Tunnel
- 3GPP: 3rd Generation Partnership Project
- APN: Access Point Name
- BSC: Base Station Controller
- CN: Core Network
- DNS: Domain Name System
- ECM: EPS Connection Management
- EMM: EPS Mobility Management
- EPC: Evolved Packet Core
- EPS: Evolved Packet System
- E-RAB: E-UTRAN Radio Access Bearer
- E-UTRAN: Evolved Universal Terrestrial Radio Access Network
- GGSN: Gateway GPRS Support Node
- GTP: GPRS Tunnelling Protocol
- GTP-U: GTP user data tunnelling
- GUMMEI: Globally Unique MME Identifier
- GUTI: Globally Unique Temporary Identity
- GW: Gateway
- HLR: Home location register
- IE: Information Element
- IM: Instant Message
- IMSI: International Mobile Subscriber Identity
- IP: Internet Protocol
- ISD: Insert Subscriber Data
- ISRAU: Inter SGSN Routing Area Update
- MM: Mobility Management
- MME: Serving GPRS Support Node
- MME: Mobility Management Entity
- MS: Mobile Station
- MT: Mobile Terminating
- NRI: Network Resource Identifier
- P GW: PDN Gateway
- PDP: Packet Data Protocol
- PDU: Packet Data Unit
- PLMN: Public Land Mobile Network
- PS: Packet Switched
- P-TMSI: Packet Temporary Mobile Subscriber Identity
- RAB: Radio Access Bearer
- RAI: Routing Area Identity
- RAN: Radio Access Network
- RAT: Radio Access Technology
- RAU: Routing Area Update
- RNC: Radio Network Controller
- S GW: Serving Gateway
- SRNS: Serving Radio Network Subsystem, the change of lu instance and transfer of the SRNS role to another RNS.
- TAI: Tracking Area Identity
- TAU: Tracking Area Update
- TEID: Tunnel Endpoint Identifier
- UE: User Equipment
- UMTS: Universal Mobile Telecommunications System
- UP: User Plane

### References:

3GPP TS 23.060
3GPP TS 23.401
3GPP TS 29.060
3GPP TS 29.274
3GPP TS 29.272

3GDT is very popular to the operator and the end user. 3GDT enables setup of a GPRS Tunnelling Protocol (GTP) tunnel for transporting payload traffic between a GGSN/PGW or a SGW and an RNC directly, thus bypassing the SGSN. GPRS Tunnelling Protocol (GTP) is a group of IP-based communications protocols used to carry General Packet Radio Service (GPRS) within GSM, UMTS and EPS within LTE networks. The tunnel separates the user traffic from the control traffic and reduces the payload traffic through the SGSN. However, even though the tunnel has many advantages, some complaints from the operators occurs because they found the 3GDT to be consuming a lot of signalling load to the GGSN/PGW or the SGW especially for some IM (Instant Message) applications. The IM applications send very short length of PDU and release the radio connection and reconnect again which gives a lot of signalling load.

In the present existing solution, the SGSN has to handle a high number of (frequent) service requests, which may exhaust the node capacity due to the frequent service request triggered, here called "Update PDP Context Request/Response" between Gn-SGSN and GGSN/PGW or "Modify Bearer Request/Response" between S4-SGSN and SGW.

There is thus a need for an improved and more effective system.

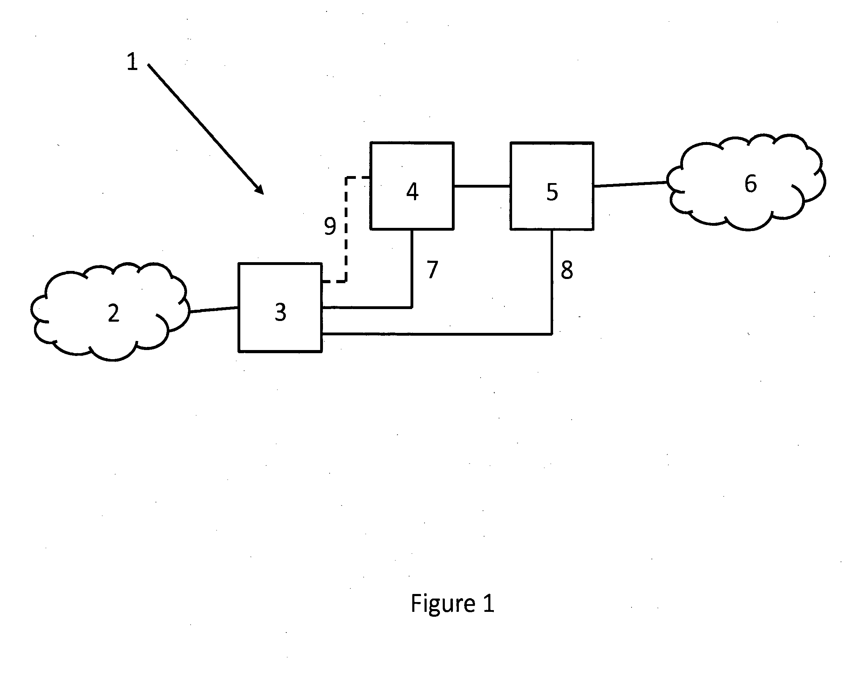

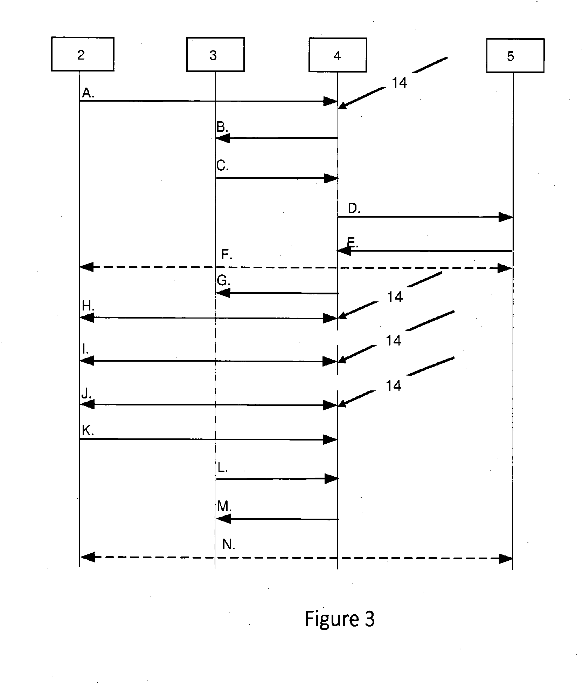

Prior art document WO 2008/077423 deals with error indication handling in a packet switched telecommunications network utilizing One Tunnel Solution/ Direct Tunnel (OTS/DT).
It suggests (c.f. item 4, fig. 3/ item 7 fig. 1) in case the QoS attributes have been downgraded, that the SGSN may inform the GGSN about the downgraded QoS attributes by sending an Update PDP Context Request to the affected GGSN. The Update PDP Context Request also comprises RAN Tunnel Endpoint Identifier Data and RAN (IP) Address for User Traffic. It moreover suggest a (c.f. item 7, fig. 3 / item 7, fig. 1) having received the IP address(es) and the TEID(s) from the RAN, the SGSN sends an Update PDP Context Request (including RAN Address, RAN TEID, QoS Negotiated) message to each GGSN concerned.
These suggested information elements enable the removal of the network initiated Service Request or SGSN initiated Update PDP Context Request which have the following advantages in connection with error indication handling:
1. If the RNC restarts and OTS/DT is active the Error Indication is sent to the GGSN which since it has two TEID's (one for the RAN and one for the SGSN) and IP Addresses assigned to the PDP Context (although only using one at a time) can deduct that it was the RNC who sent the message.
2. The GGSN can then discard the TEID/IP Address in use (pointing towards the RNC) and instead switch to the second pair (pointing towards the SGSN) without any need for signalling at all.
3. Simultaneously the SGSN receives the reset signal from the RNC that something has gone wrong and that the RAB's and lu's are removed. The RAB's are internally released in the SGSN.
4. A downlink payload packet arrives to the GGSN and this packet will be passed on to the SGSN.
5. The SGSN discovers that no RAB exist and legacy handling is applied.
6. When RAB Assignment Request is sent to the RNC, the GGSN user plane TEID and IP Address is included.
7. When RAB Assignment Response is received from the RNC, the GGSN is updated with the SGSN and RNC user plane TEID

Prior art document US 2009/0252133 shows a PMIP based mobile communication system including an access gateway (AGW) comprising a C-AGW for handling control messages and a plurality of U-AGW s for forwarding data packets, the C-AGW is provided with a management table indicating an address of U-AGW to be an endpoint of tunnel, in association with each of mobile station IDs. When a tunnel setup request message including a mobile station ID is received from one of base stations, the C-AGW searches the management table for the address of U-AGW corresponding to the mobile station ID and notifies the base station of the U-AGW address, and if the mobile station ID is not found in the management table, the C-AGW notifies the base station of an address of a particular U-AGW selected out of the U-AGWs, so that the base station establishes a tunnel for forwarding data packets toward the notified U-AGW.
PMIP, Proxy Mobile IPv6 (or PMIPv6, or PMIP), is a network-based mobility management protocol standardized by IETF and is specified in RFC 5213. It is a protocol for building a common and access technology independent of mobile core networks, accommodating various access technologies such as WiMAX, 3GPP, 3GPP2 and WLAN based access architectures.

### DISCLOSURE OF INVENTION

The object of the present invention is to provide a method for reducing the signalling load of a GPRS core network system where the previously mentioned problems are avoided. This object is achieved by the features of the characterising portion of respectively claim 1 and claim 3, wherein
- the number of service requests from the first UE (2) to the SGSN (4) is measured within a predefined measurement interval;
- if the number of service requests from the first UE (2) to the SGSN (4) does not exceed a predetermined threshold value within the predefined measurement interval, setting up a 3GDT communication between the RNC(3) and the first core network node (5) if the configuration in the SGSN (4) allows the setup of a 3GDT communication of the RNC(3);
- if the number of service requests from the first UE (2) to the SGSN (4) does exceed the predetermined threshold value within the predefined measurement interval, setting up a non-3GDT communication between the RNC(3) and the SGSN(4).

The purpose of the solution of the present invention is to prevent a core network node, for instance the GGSN/PGW or SGW, from frequent "Update PDP Request" or "Modify Bearer Request" from SGSN due to frequent 3GDT update.

According to the present invention a 3GDT will not be set up for certain services. The UE requires to setup RAB by service request, but soon to release the RAB. According to the invention the services are detected and measured more smartly based on the configuration by the operator. Based on the request type, the SGSN can detect if the message type is a Service Request or not.

The present invention relates to a method for reducing the signalling load of a GPRS core network system, the GPRS core network system comprising a first UE, a first RNC, a first SGSN, a first core network node, the first core network node being either a GGSN/PGW or a SGW, and a first IP network, where the first UE is arranged to be in communication with the first RNC, where the first RNC is arranged to be in communication with the SGSN for non-3GDT communication of the GPRS core network system or the first core network node for 3GDT communication of the GPRS core network system, where the first SGSN is arranged to be in communication with the first core network node, where the first core network node is arranged to be in contact with the first IP network, where one or more service requests originates from the first UE to the SGSN, where the number of service requests from the UE to the SGSN is measured.

The method may also allow for that a non-3GDT communication for the GPRS core network system is set up instead of the GPRS core network communication if the number of service requests from the first UE to the SGSN has exceeded a threshold value.

One advantage of the invention is that it will decrease the signalling load for the core network. This will not introduce extra signalling or message to the existing network but effectively make full use of the legacy message and improve the network quality. Additionally the need for SGSN-MME payload capacity expansion is greatly reduced. Costly hardware upgrades can be avoided and the number of SGSN-MMEs can be reduced even with many mobile broadband and payload intensive subscribers in the network.

### BRIEF DESCRIPTION OF DRAWINGS

The invention will below be described in connection to a number of drawings where;
Fig. 1 schematically shows a GPRS core network system using Gn/Gp architecture according to the invention, and;
Fig. 2 schematically shows a GPRS core network system using S3/S4 architecture according to the invention, and;
Fig. 3 schematically shows a block diagram over the method according to the invention.

### DETAILED DESCRIPTION OF DRAWINGS

Figure 1 schematically illustrates a GPRS core network system 1 setup for 3GDT using Gn/Gp architecture. The system comprises a first UE 2, a first RNC 3, a first SGSN 4, a first core network node 5 being a GGSN/PGW and a first IP network 6. Additional units (not shown) may connect to the GPRS core network system such as a first NodeB connected to a first WCDMA UE or one or more PLMN's.

The RNC 3 is arranged to be connected to the SGSN 4 for non-3GDT communication via a non-3GDT connection 7. The RNC 3 is further arranged to be connected to the first core network node 5 for 3GDT communication via a 3GDT connection 8. The RNC 3 is further arranged to be connected to the SGSN 4 via a control connection 9. The connections 7, 8, 9 are lu connections. The control connection 9 is an lu-C connection; the user plane connections, i.e. the non-3GDT connection 7 and the 3GDT connection, are lu-U connections.

The RNC 3 is connected either to the SGSN 4 or the first core network node 5 depending on whether 3GDT is enabled or not. The first SGSN 4 is arranged to be in communication with the first core network node 5, and the first core network node 5 is arranged to be in contact with the first IP network 6.

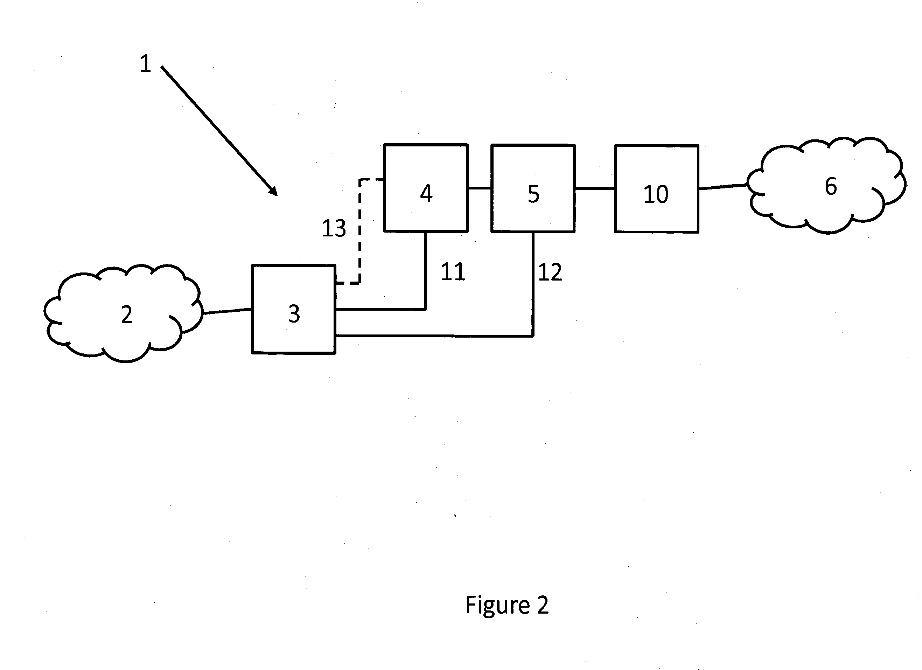

Figure 2 schematically illustrates a GPRS core network system 1 setup for 3GDT using S3/S4 architecture. The system comprises a first UE 2, a first RNC 3, a first SGSN 4, a first core network node being a SGW 5, a PGW 10 and a first IP network 6. Additional units (not shown) may connect to the GPRS core network system such as a first NodeB connected to a first WCDMA UE or one or more PLMN's.

The RNC 3 is arranged to be connected to the SGSN 4 for non-3GDT communication via a non-3GDT connection 11. The RNC 3 is further arranged to be connected to the first core network node 5 for 3GDT communication via a 3GDT connection 12. The RNC 3 is further arranged to be connected to the SGSN 4 via a control connection 13. The connections 11 and 13 are lu connections. The control connection 13 is an lu-C connection; the user plane connection, i.e. the non-3GDT connection 7 is a lu-U connections. The 3GDT connection 12 is a S12 connection

The RNC 3 is connected either to the SGSN 4 or the first core network node 5 depending on whether 3GDT is enabled or not. The first SGSN 4 is arranged to be in communication with the first core network node 5, the first core network node 5 is arranged to be in contact with the PGW 10 and the PGW 10 is arranged to be in connection with the first IP network 6.

The below description describes the setup of the 3GDT in a GPRS core network system using Gn/Gp architecture. The description is valid for the S3/S4 architecture having a SGW instead of GGSN/PGW except where specifically stated.

3GDT enables the setup of a GPRS Tunnelling Protocol (GTP) tunnel for transporting the payload traffic between the GGSN/PGW 5 and RNC 3 directly, thus bypassing the SGSN 4. This separates the user traffic from the control traffic and reduces the payload traffic through the SGSN 4.

A GTP-U tunnel for transporting traffic between the GGSN/PGW 5 and RNC 3 directly is referred to as the direct tunnel. The configuration where 3GDT is not activated and the SGSN 4 is not bypassed is referred to as the two-tunnel solution.

The SGSN 4 decides on a RNC 3, GGSN/PGW 5, APN, and optionally on subscriber basis if 3GDT should be used. The RNC configuration in the SGSN 4 specifies if an RNC 3 supports a direct user-plane connection. Whether to allow 3GDT on GGSN/PGW, APN (APN-based 3GDT configuration), and optionally subscriber basis is specified through the configuration in the SGSN 4, HLR and DNS.

If the SGSN 4 uses 3GDT, a direct tunnel between the GGSN/PGW 5 and RNC 3 replaces the two-tunnel solution in the user plane and the SGSN 4 then continuously updates both the GGSN/PGW 5 and RNC 3 with information regarding the user-plane TEID values and IP addresses. The control traffic is routed as in the two-tunnel solution.

Configuring 3GDT on a GGSN/PGW 5, APN, and subscriber basis enables the use of 3GDT, for example, for payload extensive and stationary MSs, by bypassing the SGSN 4 for the user plane while mitigating the capacity impact of continuously keeping the RNC 3 and GGSN/PGW 5 updated.

The SGSN 4 checks if 3GDT should be used each time a PDP context is activated, either as MS activated or by means of an Inter SGSN Routing Area Update (ISRAU), an Inter SGSN Inter-Radio Access Technology (IRAT) PS Handover from GSM to WCDMA Systems, or an Inter SGSN Serving Radio Network Subsystem (SRNS) relocation. Also, each time a new serving RNC is selected the use of 3GDT for a PDP context is checked.

If 3GDT is used, the set-up of the Radio Access Bearers (RABs) includes information necessary for the transport of user data between the GGSN/PGW 5 and RNC 3 directly, using a direct tunnel, illustrated by connection 9 in figure 1. The direct tunnel uses one user-plane IP address and TEID value for each of its tunnel endpoints. The IP address and TEID value are configured in each node. If the user-plane IP address and TEID value are updated at the RNC 3 tunnel endpoint, the opposite node must be updated also. A RAB is updated if the corresponding PDP context is modified.

The SGSN 4 is responsible for providing the following information to the GGSN/PGW 5:
- The RNC IP address
- The RNC user-plane TEID value

The SGSN 4 is responsible for providing the following information to the RNC 3:
- The GGSN/PGW user-plane IP address
- The GGSN/PGW user-plane TEID value

If a RAB assigned for a PDP context is released, a GTP-U tunnel is established between the SGSN 4 and GGSN/PGW 5 for handling the downlink packets. This until the direct tunnel is re-established between the GGSN/PGW 5 and the RNC 3.

If a MS with an already established PDP context moves between compliant and non-3GDT compliant RNCs, the SGSN 4 switches between using the direct tunnel and the two-tunnel solution.

For a Gn-SGSN, 3GDT will not be set-up for non-roaming traffic. But for an S4-SGSN, 3GDT can be set-up for both roaming and non-roaming traffic depending on the configuration.

The PDP Context is always updated in the GGSN/PGW or SGW when the MS moves to another RNC during all types of Routing Area Updates (RAUs). The roaming transport, Gp, remains in the SGSN-MME.

During RAB release and reestablishment and some mobility procedures that require bicasting of packets, the SGSN-MME might disconnect the tunnel between the RNC and the GGSN/PGW or SGW. For a Gn-SGSN, the SGSN-MME sets up the classic two tunnel solution between the RNC and the SGSN-MME, as well as between the SGSN-MME and the GGSN/PGW. But for an S4-SGSN, the SGSN-MME releases the direct tunnel between the RNC and the SGW. When using S4-SGSN, this feature also supports the S12 interface.

Figure 3 schematically illustrates a block diagram showing an implementation of the method according to the invention.

The method may comprise the steps of
A. The SGSN 4 receiving a Service Request 14 could due to either a Service Request (Service type = Data) from the MS due to Uplink payload or Downlink payload from GGSN/PGW 5 resulting in a Service Request (Service type = paging response) from RNC 3.
B. The SGSN 4 sends RAB Assignment Request towards RNC 3 with GGSN/PGW 5 User Plane IP-address and TEID. (RAB Assignment Request)
C. The SGSN 4 receives RAB Assignment Response from RNC 3. (RAB Assignment Response)
D. If the requirements for 3GDT are fulfilled an Update PDP Context Request is sent to the GGSN/PGW 5 with RNC 3 UP IP-address and TEID. (Update PDP Context Request)
E. An Update PDP Context Response is sent from the GGSN/PGW 5. (Update PDP Context Response)
F. PDU is transferred between UE 2 and PDN network. (PDU)
G. lu is released if the PDU transferring finished. (lu Release)
H-J. Several Service Requests 14 are triggered in the SGSN 4 due to frequent data transferring request from the UE 2. (Service Request)
   When the rate of Service Requests for this event has reached a predetermined threshold in a predetermined measurement interval a two tunnel solution starts to set up from now on. The two tunnel solution may be set up for a predetermined period of time or indefinitely, depending on the operator's configuration.
K. If the predetermined threshold is reached, SGSN 4 decides not to setup a direct tunnel for this subscriber. (Service request)
L-N. The two tunnel solution will be kept for this subscriber. (RAB Assignment Request, RAB Assignment Response, PDU) The two tunnel solution will be kept as long as Service Requests are received by the SGSN 4 from the UE 2 with a high enough frequency during a period configured by an operator, i.e. as long as the number of Service Requests exceeds a predetermined threshold in a predetermined measurement interval.

One example of the above may be that the predetermined threshold is 5, the predetermined measurement interval may be one minute and the predetermined period of time is 10 minutes. This would mean that the SGSN 4 receives a service request from the same UE 2 five times in one minute. The SGSN 4 may then choose the two-tunnel solution for 10 minutes. The two tunnel solution may in addition to the 10 minutes be active indefinitely depending on configuration conditions set by the operator. Other suitable predetermined values of threshold, measurement interval and period of are of course conceivable.

Since 3GDT impacts both payload and signalling, on network as well as on node level, it is strongly recommended to perform a network analysis of the specific operator traffic case. This is done in order to determine optional configurations and node sizes. Here follows payload and signalling sums that affect dimensioning.
- The total payload through the SGSN-MME is the sum of the following:
   - Roaming WCDMA traffic payload in Gn-SGSN.
   - GSM payload, for dual and triple-access SGSN-MME.
   - Non-roaming WCDMA payload for WCDMA users configured for 3GDT OFF.
- The total signalling in the SGSN-MME consists of the following:
   - Initial SGSN-MME signalling.
   - Additional 3GDT signalling for WCDMA users configured for 3GDT ON.

## Claims

1. Method for reducing the signalling load of a General Packet Radio Service, GPRS, core network system, the GPRS core network system comprising a first User Entity, UE (2), a first Radio Network Controller, RNC (3), a first Serving GPRS Support Node, SGSN (4), a first core network node (5), the network node being either a Gateway GPRS Support Node, GGSN, / Packet Data Network Gateway, PGW or a Serving Gateway, SGW, and a first Internet Protocol, IP network (6), where the first UE (2) is arranged to be in communication with the first RNC (3), where the first RNC (3) is arranged to be in communication with the SGSN (4) for non-3G Direct Tunnel, 3GDT, communication of the GPRS core network system or the with first core network node (5) for 3GDT communication of the GPRS core network system, where the first SGSN (4) is arranged to be in communication with the first core network node (5), where the first core network node (5) is arranged to be in contact with the first IP network (6), where one or more service requests originates from the first UE (2) to the SGSN (4), **characterized in that**
- the number of service requests from the first UE (2) to the SGSN (4) is measured within a predefined measurement interval;
- if the number of service requests from the first UE (2) to the SGSN (4) does not exceed a predetermined threshold value within the predefined measurement interval, setting up a 3GDT communication between the RNC (3) and the first core network (5) if the configuration in the SGSN (4) allows the setup of a 3GDT communication at the RNC (3),
- if the number of service requests from the first UE (2) to the SGSN (4) does exceed the predetermined threshold value within the predefined measurement interval, setting up a non-3GDT communication between the RNC (3) and the SGSN (4).

2. Method according to claim 1, wherein the 3GDT communication is released if the PDU transferring is finished.

3. Serving GPRS Support Node, SGSN (4), adapted for reducing the signalling load of a General Packet Radio Service, GPRS, core network system, the GPRS core network system comprising a first User Entity, UE (2), a first Radio Network Controller, RNC (3), the Serving GPRS Support Node, SGSN (4), a first core network node (5), the network node being either a Gateway GPRS Support Node, GGSN, Packet Data Network Gateway, PGW or a Serving Gateway, SGW, and a first Internet Protocol, IP network (6), where the first UE (2) is arranged to be in communication with the first RNC (3), where the first RNC (3) is arranged to be in communication with the SGSN (4) for non-3G Direct Tunnel, 3GDT, communication of the GPRS core network system or with the first core network node (5) for 3GDT communication of the GPRS core network system, where the first SGSN (4) is arranged to be in communication with the first core network node (5), where the first core network node (5) is arranged to be in contact with the first IP network (6), where one or more service requests originates from the first UE (2) to the SGSN (4), **characterized in that** the SGSN (4) is arranged to
- measure the number of service requests from the first UE (2) to the SGSN (4) within a predefined measurement interval;
- setup a 3GDT communication between the RNC (3) and the first core network node (5) if the configuration in the SGSN (4) allows the setup of a 3GDT communication at the RNC (3) and if the number of service requests from the first UE (2) to the SGSN (4) does not exceed a predetermined threshold value within the predefined measurement interval;
- setup a non-3GDT communication between the RNC (3) and the SGNSGSN (4) if the number of service requests from the first UE (2) to the SGSN (4) does exceed the predetermined threshold value within the predefined measurement interval.

4. Method according to claim 3, wherein the 3GDT communication is released if the PDU transferring is finished.

## Patentansprüche

1. Verfahren zur Verringerung der Signalisierungslast eines Kernnetzsystems des allgemeinen paketvermittelten Funkdienstes, GPRS, wobei das GPRS-Kernnetzsystem eine erste Benutzerinstanz, UE (2), eine erste Funknetzsteuerung, RNC (3), einen ersten versorgenden GPRS-Unterstützungsknoten, SGSN (4), einen ersten Kernnetzknoten (5), wobei der Netzknoten entweder ein Gateway-GPRS-Unterstützungsknoten, GGSN, ein Paketdatennetz-Gateway, PGW, oder ein versorgendes Gateway, SGW, ist, und ein erstes Internetprotokoll, IP,-Netz (6) umfasst, wobei die erste UE (2) so ausgelegt ist, dass sie mit der ersten RNC (3) in Kommunikation ist, wobei die erste RNC (3) so ausgelegt ist, dass sie mit dem SGSN (4) für Nicht-3G-Direktunnel, 3GDT,-Kommunikation des GPRS-Kernnetzsystems oder mit dem ersten Kernnetzknoten (5) für 3GDT-Kommunikation des GPRS-Kernnetzsystems in Kommunikation ist, wobei der erste SGSN (4) so ausgelegt ist, dass er mit dem ersten Kernnetzknoten (5) in Kommunikation ist, wobei der erste Kernnetzknoten (5) so ausgelegt ist, dass er mit dem ersten IP-Netz (6) in Kontakt ist, wobei eine oder mehrere Dienstanforderungen von der ersten UE (2) an den SGSN (4) abgehen, **dadurch gekennzeichnet, dass**:
- die Anzahl von Dienstanforderungen von der ersten UE (2) an den SGSN (4) innerhalb eines vordefinierten Messintervalls gemessen wird;
- Aufbauen, wenn die Anzahl von Dienstanforderungen von der ersten UE (2) an den SGSN (4) einen vorbestimmten Schwellenwert innerhalb des vordefinierten Messintervalls nicht überschreitet, einer 3GDT-Kommunikation zwischen der RNC (3) und dem ersten Kernnetz (5), wenn die Konfiguration im SGSN (4) den Aufbau einer 3GDT-Kommunikastion an der RNC (3) zulässt,
- Aufbauen, wenn die Anzahl von Dienstanforderungen von der ersten UE (2) an den SGSN (4) den vorbestimmten Schwellenwert innerhalb des vordefinierten Messintervalls überschreitet, einer Nicht-3GDT-Kommunikation zwischen der RNC (3) und dem SGSN (4).

2. Verfahren nach Anspruch 1, wobei die 3GDT-Kommunikation freigegeben wird, wenn die PDU-Übertragung abgeschlossen ist.

3. Versorgender GPRS-Unterstützungsknoten, SGSN (4), der zum Verringern der Signalisierungslast eines Kernnetzsystems des allgemeinen paketvermittelten Funkdienstes, GPRS, ausgelegt ist, wobei das GPRS-Kernnetzsystem eine erste Benutzerinstanz, UE (2), eine erste Funknetzsteuerung, RNC (3), den versorgenden GPRS-Unterstützungsknoten, SGSN (4), einen ersten Kernnetzknoten (5), wobei der Netzknoten entweder ein Gateway-GPRS-Unterstützungsknoten, GGSN, ein Paketdatennetz-Gateway, PGW, oder ein versorgendes Gateway, SGW, ist, und ein erstes Internetprotokoll, IP,-Netz (6) umfasst, wobei die erste UE (2) so ausgelegt ist, dass sie mit der ersten RNC (3) in Kommunikation ist, wobei die erste RNC (3) so ausgelegt ist, dass sie mit dem SGSN (4) für Nicht-3G-Direktunnel, 3GDT,-Kommunikation des GPRS-Kernnetzsystems oder mit dem ersten Kernnetzknoten (5) für 3GDT-Kommunikation des GPRS-Kernnetzsystems in Kommunikation ist, wobei der erste SGSN (4) so ausgelegt ist, dass er mit dem ersten Kernnetzknoten (5) in Kommunikation ist, wobei der erste Kernnetzknoten (5) so ausgelegt ist, dass er mit dem ersten IP-Netz (6) in Kontakt ist, wobei eine oder mehrere Dienstanforderungen von der ersten UE (2) an den SGSN (4) abgehen, **dadurch gekennzeichnet, dass** der SGSN (4) ausgelegt ist zum:
- Messen der Anzahl von Dienstanforderungen von der ersten UE (2) an den SGSN (4) innerhalb eines vordefinierten Messintervalls;
- Aufbauen einer 3GDT-Kommunikation zwischen der RNC (3) und dem ersten Kernnetz (5), wenn die Konfiguration im SGSN (4) den Aufbau einer 3GDT-Kommunikastion an der RNC (3) zulässt und wenn die Anzahl von Dienstanforderungen von der ersten UE (2) an den SGSN (4) einen vorbestimmten Schwellenwert innerhalb des vordefinierten Messintervalls nicht überschreitet;
- Aufbauen einer Nicht-3GDT-Kommunikation zwischen der RNC (3) und dem SGSN (4), wenn die Anzahl von Dienstanforderungen von der ersten UE (2) an den SGSN (4) den vorbestimmten Schwellenwert innerhalb des vordefinierten Messintervalls überschreitet.

4. SGSN nach Anspruch 3, wobei die 3GDT-Kommunikation freigegeben wird, wenn die PDU-Übertragung abgeschlossen ist.

## Revendications

1. Procédé de régulation de la charge de signalisation d'un système de réseau central GPRS, General Packet Radio Service, le système de réseau central GPRS comprenant une première entité d'utilisateur UE (2), un premier contrôleur de réseau radio RNC (3), un premier noeud de support GPRS de desserte SGSN (4), un premier noeud de réseau central (5), le noeud de réseau étant soit un noeud de support GPRS de passerelle GGSN/ passerelle de réseau de données en paquets PGW, soit une passerelle de desserte SGW et un premier réseau à protocole Internet IP (6), où le premier RNC (2) est agencé afin d'être en communication avec le premier RNC (3), où le premier RNC (3) est agencé afin d'être en communication avec le SGSN (4) pour une communication de tunnel direct non 3G, 3GDT, du système de réseau central GPRS ou avec le premier noeud de réseau central (5) pour une communication 3GDT du système de réseau central GPRS, où le premier SGSN (4) est agencé afin d'être en communication avec le premier noeud de réseau central (5), où le premier noeud de réseau central (5) est agencé afin d'être en contact avec le premier réseau IP (6), où une ou plusieurs demandes de service émanent du premier UE (2) au SGSN (4), **caractérisé en ce que**
- le nombre de demandes de service du premier UE (2) au SGSN (4) est mesuré à l'intérieur d'un intervalle de mesure prédéfini ;
- si le nombre de demandes de service du premier UE (2) au SGSN (4) n'excède pas une valeur de seuil prédéterminée à l'intérieur de l'intervalle de mesure prédéfini, établir une communication 3GDT entre le RNC (3) et le premier réseau central (5) si a configuration dans le SGSN (4) permet l'établissement d'une communication 3GDT au niveau du RNC (3) ;
- si le nombre de demandes de service du premier UE (2) au SGSN (4) n'excède pas la valeur de seuil prédéterminée à l'intérieur de l'intervalle de mesure prédéfini, établir une communication non 3GDT entre le RNC (3) et le SGSN (4).

2. Procédé selon la revendication 1, dans lequel la communication 3GDT est libérée si le transfert de P"DU est terminé.

3. Noeud de support GPRS de desserte SGSN (4), adapté pour réduire la charge de signalisation d'un système de réseau central GPRS, General Packet Radio Service, le système de réseau central GPRS comprenant une première entité d'utilisateur UZE (2), un premier contrôleur de réseau radio RNC (3), le noeud de support GPRS de desserte SGSN (4), un premier noeud de réseau central (5), le noeud de réseau étant soit un noeud de support GPRS de passerelle GGSN/ passerelle de réseau de données en paquets PGW, soit une passerelle de desserte SGW et un premier réseau à protocole Internet IP (6), où le premier UE (2) est agencé afin d'être en communication avec le premier RNC (3), où le premier RNC (3) est agencé afin d'être en communication avec le SGSN (4) pour une communication de tunnel direction non 3G, 3GDT, du système de réseau central GPRS avec le premier noeud de réseau central (5) pour une communication 3GDT du système de réseau central GPRS, où le premier SGSN (4) est agencé afin d'être en communication avec le premier noeud de réseau central (5), où le premier noeud de réseau central (5) est agencé afin d'être en contact avec le premier réseau IP (6), où une ou plusieurs demandes de service émanent du premier UE (2) au SGSN (4), **caractérisé en ce que** le SGSN (4) est agencé afin de :
- mesurer le nombre de demandes de service du premier UE (2) au SGSN (4) à l'intérieur d'un intervalle de mesure prédéfini ;
- établir une communication 3GDT entre le RNC (3) et le premier réseau central (5) si a configuration dans le SGSN (4) permet l'établissement d'une communication 3GDT au niveau du RNC (3) si le nombre de demandes de service du premier UE (2) au SGSN (4) n'excède pas une valeur de seuil prédéterminée à l'intérieur de l'intervalle de mesure prédéfini; et
- établir une communication non 3GDT entre le RNC (3) et le SGSN (4) si le nombre de demandes de service du premier UE (2) au SGSN (4) n'excède pas la valeur de seuil prédéterminée à l'intérieur de l'intervalle de mesure prédéfini.

4. Procédé selon la revendication 3, dans lequel la communication 3GDT est libérée si le transfert de PDU est terminé.
